# EUROPÄISCHE PATENTSCHRIFT

(11) **EP 0 627 068 B1**
(45) Veröffentlichungstag und Bekanntmachung des Hinweises auf die Patenterteilung: **25.11.1998**
(21) Anmeldenummer: 94903857.4
(22) Anmeldetag: 21.12.1993
(51) Int. Cl.: G01B 7/00

(54) **TASTELEMENT FUR KOORDINATENMESSSYSTEME**
PROBE ELEMENT FOR COORDINATE MEASUREMENT SYSTEMS
ELEMENT PALPEUR POUR SYSTEMES DE MESURE DE COORDONNEES

(30) Priorität: 21.12.1992 DE 4243284
(43) Veröffentlichungstag der Anmeldung: 07.12.1994
(73) Patentinhaber: CARL ZEISS JENA GmbH, 07745 Jena (DE)
(72) Erfinder: BARTZKE, Karlheinz, D-07747 Jena (DE); SEYDEL, Eberhard, D-74924 Neckarbischofsheim (DE); ANTRACK, Torsten, D-12683 Berlin (DE)
(74) Vertreter: Geyer, Werner, Dr.-Ing.
(86) Internationale Anmeldenummer: EP9303647
(87) Internationale Veröffentlichungsnummer: WO9415171

(56) Entgegenhaltungen:
- FR-A- 2 468 875
- GB-A- 2 005 022
- GB-A- 2 070 249

## Beschreibung

Die Erfindung betrifft ein Tastelement für Koordinatenmeßsysteme, welches insbesondere zur Oberflächenantastung bzw. dreidimensionalen Vermessung von Prüflingen kleinster Abmessungen eingesetzt werden kann.

Bekannt ist die mechanische Antastung mit Hilfe einer Tastkugel (Neumann, H.J; Koordinatenmeßtechnik, Bibliothek der Technik, Bd. 41, Verlag moderne Industrie, München 1990). Derartige Tastelemente bieten den Vorteil, daß alle Punkte ihrer Oberfläche zu ihrem Mittelpunkt stets einen konstanten Abstand haben und sie sich auch sehr genau herstellen lassen. Die Formabweichungen der Tastkugeln sind ca. 0,3 µm. Nachteilig ist jedoch, daß die Meßergebnisse bei vielen Meßaufgaben, wie beispielsweise bei Innen- und Außenmessungen korrigiert werden müssen, da es nicht möglich ist, mit dem Mittelpunkt der Tastkugel anzutasten. Voraussetzung für die Korrektur des Meßergebnisses ist dabei die Kenntnis des Berührungspunktes auf der Tastkugel mit der Prüflingsoberfläche. Da dieser Punkt nicht bekannt ist, ist eine derartige Messung immer, wenn meistens auch nur mit sehr kleinen, Meßfehlern behaftet. Für Messung an Kleinstproben sind die Abmessungen der Tastkugeln zu groß. Ein weiterer Nachteil ist, daß auf Grund der Tastkräfte von 0,1 bis 1 N am Prüfling, an der Kugel und am Tastkugelhalter Deformationen auftreten, die zu teilweise nicht korrigierbaren Meßfehlern führen.
Weiterhin ist das laterale Auflösungsvermögen einer Kugel denkbar ungünstig, weil durch die Wölbung der Kugeloberfläche und die Abplattung infolge der Meßkraft kein Meßpunkt sondern ein Meßfleck entsteht, der Durchmesser im Bereich von hundertstel mm aufweist. Die Folge hiervon ist, daß der Meßwert einen über diesen Fleck gewonnenen Durchschnittswert darstellt.
Aus den beschriebenen Gründen sind mit Tastkugeln Meßfehler unter 1 µm und Messungen an kleinsten Prüflingen, z.B. mit Innendurchmessern < 1 mm, nicht realisierbar.
Bei einem Kugeltastelement erfolgt die Meßsignalgewinnung durch Verkippen eines federnd gelagerten Tellers infolge der Antastbewegung. Ein sich hierdurch öffnender elektrischer Kontakt startet die Meßsignalgewinnung. Das Verfahren gestattet die dynamische Messung aus der Bewegung, ist aber nicht sehr genau. Deshalb werden neuerdings Kugeltaster eingesetzt, deren Stiel mit Piezoresonatoren verbunden sind, die auf Druck reagieren und die höhere Schaltgenauigkeiten gestatten. Aus GB-A-2 070 249 ist ein Tastelement bekannt, das aus einem zentralen Piezoresonator besteht, der an seinem frei vorstehenden Ende mit Tastelementen versehen ist, die an ihren Enden wiederum Mikrotastelemente in form kleiner Kugeln aufweisen. Eine ähnliche Anordnung ist aus FR-A-2 468 875 bekannt.

Eine weitere Steigerung der Meßgenauigkeit kann dadurch erzielt werden, daß der Tastkopf mit eigenen 3-D-Feinverstellungen, Feinmeßsystemen und regelbaren Meßkrafteinrichtungen ausgerüstet wird, die es ermöglichen, im Stillstand des Tastkopfes die Tastkugel an der Prüflingsoberfläche antasten zu lassen und die Tastkugel kurze Längen entlang der Oberfläche zu führen (scanning).
Trotz all dieser Fortschritte bleiben die mit der Tastkugel und den Tastkräften verbundenen Nachteile bestehen.
Weiterhin sind optische Tastelemente zur Koordinatenmessung bekannt (Gussek, B.; Bartel, R.; Hoffmann, W. "Ein Mikrotaster erfaßt berührungslos Profile im optischen Tastschnitt", Feinwerktechnik und Meßtechnik 98 (1990) 10, Seite 401 - 405). Derartige Tastelemente werden vorwiegend bei weichen Prüflingen eingesetzt. Ihre Vorteile bestehen darin, daß sie berührungslos- und kräftefrei messen und die Lage des optischen Tastpunktes im Gegensatz zur Kugel bekannt ist.
Ein geometrisch wirkendes Triangulationsverfahren weist zwar Auflösungen bis unter 0,1 µm in vertikaler Richtung auf, aber die durch die optischen Eigenschaften der Prüflingsoberfläche bedingten Meßfehler betragen bis zu mehreren Mikrometern.
Ein Autofokusverfahren, wie das obige, setzt Oberflächen mit ausreichendem Reflektionsvermögen voraus und weist in dessen Abhängigkeit ebenfalls Meßfehler bis zu mehreren Mikrometern auf. Der Durchmesser des Lichtstrahles bzw. Fokus beträgt mehrere Mikrometer und beschränkt das laterale Auflösungsvermögen dieser Systeme. Für Meßaufgaben, die ein laterales Auflösungsvermögen und Meßfehler unter 1 µm erfordern oder Meßlängen unter 1 mm für Innenmessungen aufweisen, sind die herkömmlichen Oberflächenantastverfahren der Koordinatenmeßtechnik ungeeignet. So ist das Messen von Verzahnungen mit Modul ab 0.01 mm, von Bohrungen mit Durchmesser < 1 mm, von Gewinden < M1 und von Prüflingen der Mikromechanik durch die herkömmliche 3-D-Meßtechnik nicht gelöst.
Weiterhin bekannt sind Anordnungen, bei denen mit Mikrotastnadel und Piezoresonatoren Oberflächenstrukturen gemessen werden, die jedoch für Aufgaben der 3-D-Meßtechnik ungeeignet sind, da mit den dort beschriebenen Meßelementen ein 3-D-Meßkopf nicht sinnvoll erscheint. Der Kontakt der auf dem Piezoresonator befestigten schwingenden Nadel mit der Prüflingsoberfläche wird festgestellt, indem entweder die Änderung der Resonatorparameter oder die Berührungskräfte gemessen werden (DE-OS 4035076.2, DE-OS 4035084.2). Der Erfindung liegt die Aufgabe zugrunde, ein Tastelement für Koordinatenmeßsysteme zu entwickeln, welches bei einer definierten Punktantastung bei Meßkräften von < 10⁻⁸ N Innenmessungen < 1 mm mit Meßgenauigkeiten < 0,1 µm und lateralen Auflösungen < 10 nm ermöglicht und der durch die Größe seines Tastelementes um Faktor > 10³ unter den bisher in der Koordinatenmeßtechnik üblichen Abmessungen liegt..
Erfindungsgemäß wird diese Aufgaben durch die kennzeichnenden Merkmale des Patentanspruchs 1 gelöst.
Demnach besteht die Erfindung darin, daß das Tastelement aus polygonartig angeordneten Piezoresonatoren besteht und auf den Piezoresonatoren polygonartig Mikrotastelemente, welche Innen- und Außenflächen in verschiedene Koordinaten detektieren, befestigt sind. Die Berührungsdetektion der Mikrotastelemente mit einer Probenoberfläche erfolgt durch Erfassung der Resonanzparameteränderung der Piezoresonatoren.
Vorteilhafte Ausgestaltungsformen sind durch die Unteransprüche gegeben. Demnach ist es von Vorteil, wenn die Mikrotastelemente am Piezoresonator aus Hartstoffen, wie z.B. Diamanten oder Glaskügelchen bestehen.
Weiterhin ist es von Vorteil die Piezoresonatoren als Stimmgabel-, Torsions- oder Longitudinalschwinger mit auszubilden. Vorteilhafte Abmaße von Torsions- oder Longitudinalschwingern sind dabei Querschnitte von ca. 100 - 1000 µm² bei einer Länge von 100 - 1000 µm.
In Abhängigkeit von den Meßaufgaben kann es von Vorteil sein, wenn der Piezoresonator aus einem plattenförmigen Element besteht, welches vier um 90°, drei um 120° oder sechs um 60° versetzt orientierte Stimmgabel-, Torsions- oder Longitudialschwinger aufweist. Bedingt durch die Verwendung mehrerer Mikrotastelemente erfährt beim Anmessen einer Probenfläche mindestens ein Mikrotastelement Kontakt mit der Oberfläche der zu messenden Probe. Der Kontakt wird festgestellt, indem in an sich bekannter Weise entweder die Änderung der Resonanzparameter oder die Berührungskräfte gemessen werden. Um die Stellen der Antastung genau zu definieren, muß die Lage der Mikrotastelemente am Tastelement bekannt sein, wozu ein auch bei herkömmlichen Kugeltastelementen bekanntes Kalibrierverfahren mit Hilfe einer Kalibrierkugel Anwendung finden kann.
Durch die Gestaltung des Tastelementes unter Verwendung von Mikrotastelementen wird eine definierte Punktantastung realisiert. Gleichzeitig werden die Tastkräfte gegenüber einer herkömmlichen Kugelantastung um den Faktor 10¹⁰ auf 10⁻⁸ N verringert.
Da die Schwingungsamplituden der Resonatoren je nach geometrischer Form im Bereich Angström bis Nanometer liegen, ist es zum sicheren Anfahren einer Oberfläche wichtig, ein Vorwarnsignal auswerten zu können. Hierbei kann auf an sich bekannte anordnungs- bzw. verfahrenstechnische Lösungen zurückgegriffen werden, indem beispielsweise ein zusätzlicher optischer Indikator verwendet wird. Es ist auch möglich, die im Medium Luft zwischen Mikrotastelement und Prüflingsoberfläche bei Spaltbreiten von Mikrometern wirkenden akustischen Koppeleffekte als Vorwarnsignal auszunutzen. Sie bewirken ebenfalls eine Änderung der Resonanzparameter des Piezoresonators.

Das erfindungsgemäße Tastelement für Koordinatenmeßsysteme soll nachstehend anhand von Ausführungsbeispielen näher erläutert werden. Dazu zeigen:
- Figur 1:: 3D - Tastelement
- Figur 2:: 3D - Tastelement, Darstellung des Piezoresonators in Form einer Stimmgabelschwingeranordnung
- Figur 3:: 3D - Tastelement, Darstellung des Piezoresonators in Form von Torsions- oder Longitudinalschwingern
- Figur 4:: 3D - Tastelement, Darstellung des Piezoresonators in Form von Torsions- oder Longitudinalschwingern mit passivem Verbindungselement
- Figur 5:: 3D - Tastelement (dreifach)
- Figur 6:: 3D - Tastelement (sechsfach)
- Figur 7:: 3D - Tastelement (vierfach)
- Figur 8:: 3D - Tastelement, Darstellung der Mikrotastelemente mittels Glasfaser und Miniaturkügelchen

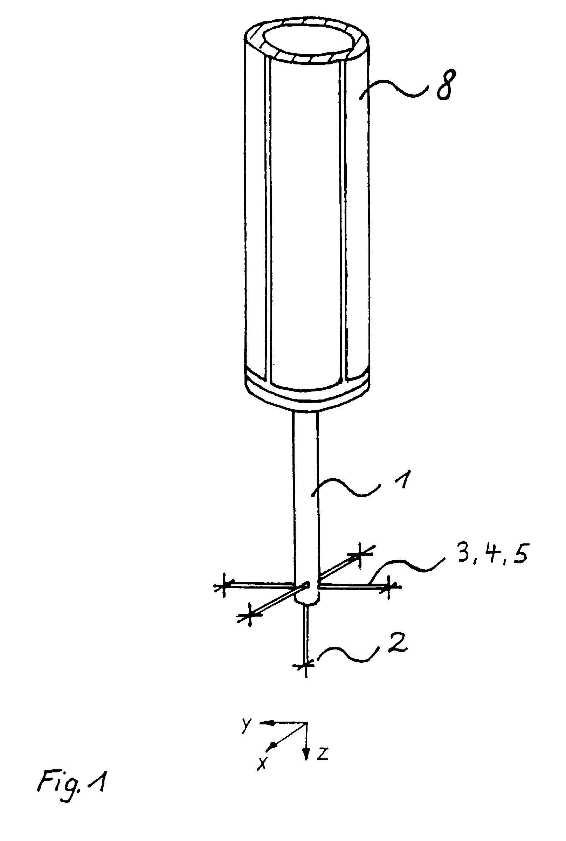

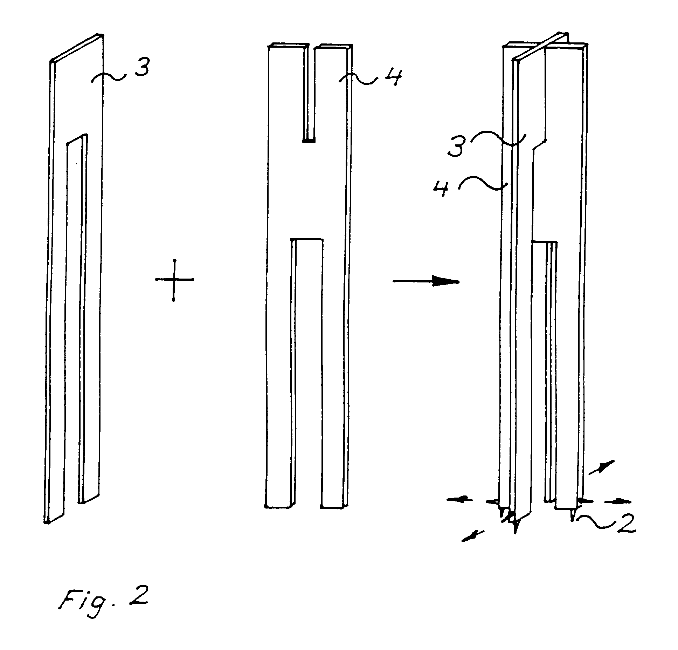

Figur 1 zeigt das erfindungsgemäße Tastelement, bestehend aus fünf an einem Stab 1 polygonartig angeordneten Piezoresonatoren 3, 4, 5. An den Piezoresonatoren 3, 4, 5 sind polygonartig Mikrotastelemente 2 angebracht. Die Annäherung des Tastelementes an die Probenoberfläche erfolgt in bekannter Weise mittels eines Piezorohres 8 mit aufgebrachten Steuerelektroden.
Das aus Piezokeramik bestehende Piezorohr 8 mit aufgebrachten Steuerelektroden hat eine Länge von etwa 20 mm und einen Außendurchmesser von etwa 2 mm. Die auf dem äußeren und inneren Zylindermantel des Piezorohres 8 aufgebrachten Steuerelektroden sind elektrisch leitfähig und so aufgetrennt, daß gleiche schalenartige Steuerelektroden entstehen, die von einer nicht dargestellten Steuerelektronik mit gleichen oder unterschiedlichen Steuerspannungen beaufschlagt werden können. Infolge gleicher Steuerspannungen an den Steuerelektroden bilden sich zwischen der Innen- und den Außenelektroden im Piezoröhrchen gleiche elektrische Fehler aus, die aufgrund des reziproken transversalen piezoelektrischen Effektes je nach Vorzeichen und Größe der Steuerspannung zu einer Dehnung oder Stauchung des Piezoröhrchens in Richtung der Zylinderachse z führen.
Eine zusätzliche piezoelektrische Verbiegung des Piezoröhrchens in den Richtungen x,y tritt auf, wenn die Steuerelektroden mit unterschiedlichen elektrischen Spannungen beaufschlagt werden, so daß die Mantelsegmente des Piezoröhrchens unterschiedliche Dehnungen oder Stauchungen in z-Richtung erfahren, die eine Verbiegung des Piezoröhrchens 8 bewirken. Durch dieses bekannte Verfahren ist es möglich, das auf der Stirnfläche des Piezoröhrchens befestigte erfindungsgemäße Tastelement in einem räumlichen Meßbereich, der eine Größe von ca. 100 x 100 µm in x, y-Richtung und von ca. 10 µm in z-Richtung aufweist, präzise zu verstellen und die hochauflösende Antastung der Probenoberfläche zu bewirken.
Für größere erforderliche Verstellwege (z.B. Millimeterbereich) wird das Piezoröhrchen oder die Probe durch bekannte mechanische Verstelleinrichtungen meßbar in den Koordinaten x, y, z verschoben.
Die polygonartig angeordneten Mikrotastelemente 2 weisen Abmessungen im Bereich von etwa 100 nm - 10 mm auf, während die Größe der Piezoresonatoren 3, 4, 5 im Bereich von 10 µm - 10 mm, je nach Anwendungsgebiet, liegt. Vorteilhaft bestehen die Piezoresonatoren 3, 4 und 5 aus piezoelektrischem Quarz, der bei geeigneter Orientierung, Schwingergeometrie und Erregerelektrodengestaltung hohe Schwinggüten, hohe Resonanzfrequenzen im Bereich von 0,1 - 10 MHz, niedrige Zeitkonstanten von 1 µs - 1 ms und geringe Tastkräfte von 0,1 - 100 nN ermöglicht. Um ein Vermessen komplizierter Probengeometrien, wie sie z.B. in der Mikromechanik üblich sind, zu ermöglichen, können die Mikrotastelemente 2 über passive Verbindungselemente 6, z.B. in Form von Kegeln oder Stäbchen, die in der Größe je nach Anwendungsfall den Mikrotastelementen 2 angepaßt sind, mit dem Piezoresonator verbunden sein. Sie können aus Metallen oder Nichtmetallen bestehen. Von entscheidender Bedeutung für die Funktionsfähigkeit des Antastervorganges des erfindungsgemäßen Tastelementes an die Probe ist, daß alle am Antastvorgang beteiligten mechanischen Elemente hohe mechanische Eigenresonanzen von mehr als 10 kHz aufweisen. Unter dieser Bedingung bleibt der Meßvorgang weitgehend unbeeinflußt von störenden mechanischen Umweltschwingungen.
Die Antastung der Probenoberfläche erfolgt in bekannter Weise dadurch, daß die mit den Piezoresonatoren 3, 4 oder 5 im o.g. Frequenzbereich schwingenden Mikrotastelementen 2 bei Annährung oder Berührung der Probe die Resonanz des Piezoresonators 3, 4 oder 5 in seiner Frequenz, Phase oder Amplitude ändern. Diese Resonanzänderungen sind in bekannter Weise elektronisch meßbar und können genutzt werden, um entweder den Nährungsvorgang von Probe und Mikrotastelement 2 abzuschalten oder das schwingende Mikrotastelement 2 der Probenoberfläche gesteuert nachzuführen.
Ein als Tastelement dienender Piezoresonator in Form einer Stimmgabelschwingeranordnung ist in Figur 2 dargestellt. Durch Ineinanderführen zweier verschiedener Stimmgabelschwinger 3 und 4 wird ein Piezoresonator gewonnen, wobei jeder der Stimmgabelschwinger 3 und 4 mit mindestens einem Mikrotastelement 2 bestückt ist.
Aufgrund der unterschiedlichen Gestalt der Stimmgabellängen der Stimmgabelschwinger 3 und 4, die unterschiedliche Resonanzfrequenzen zur Folge haben, ist eine einfache Zuordnung des Tastsignals zu einem diametralen Paar von Mikrotastelementen 2 möglich. Derartige Ausführungsformen sind sowohl für Innen- als auch für Außenmessungen einsetzbar.

Da Piezoresonatoren photolithographisch in sehr kleinen Abmessungen herstellbar sind, lassen sich damit Bohrungswandungen mit Durchmesser < 1 mm vermessen.
Die Länge der Stimmgabelpaare, die durch entsprechende Gestaltung der Erregerelektroden gegeneinander schwingen, kann etwa 1 mm betragen.
Obertonschwinger, die etwa in der Mitte der Stimmgabelschenkel einen zusätzlichen Schwingungsknoten aufweisen, haben Resonanzfrequenzen von ca. 1 MHz.

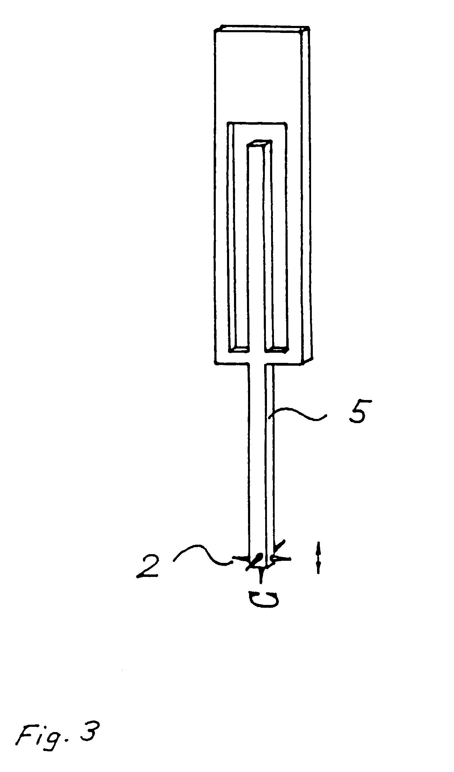

Figur 3 zeigt ein 3D-Tastelcment aus Piezoresonatoren in Form eines Torsions- oder Longitudinalschwingers 5, wobei dieser mit mehreren Mikrotastelementen 2 bestückt ist. Aufgrund der geringen Masse der Mikrotastelemente 2 gibt es keine Beeinträchtigungen der Resonanzeigenschaften. Der Vorteil derartiger Ausgestaltungsformen liegt darin, daß neben der Realisierbarkeit einer besonders kleinen Bauweise eine Berührungsdetektion in drei Koordinaten pro Stabschwinger möglich ist.
Der Torsions- oder Longitudinalschwinger 5 ist in seiner Mitte im Schwingungsknoten gehaltert.

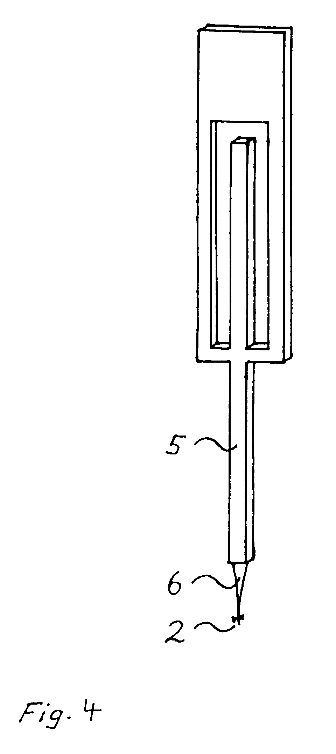

Figur 4 zeigt ein 3D-Tastelement aus Piezoresonatoren in Form von Torsions- oder Longitudinalschwingern 5 mit polygonartigen Mikrotastelementen 2, wobei zwischen dem Torsions- oder Longitudinalschwinger 5 und den Mikrotastelementen 2 ein passives Verbindungselement 6 zwischengelagert ist. An dem Verbindungselement 6 befinden sich polygonartig angeordnete Mikrotastelemente 2. Eine derartige Gestaltungsmöglichkeit des Tastelementes, eignet sich besonders für Messungen kleinster Innenmaße, wobei eine Berührungsdetektion in drei Koordinaten pro Tastelement vorgenommen werden kann.

Die hierbei detektierbaren kleinsten Innenmaße an Proben hängen nur noch von der Geometrie der polygonartigen Mikrotastelemente 2 und nicht von der Geometrie des Torsions- oder Longitudinalschwingers 5 ab.
Bei Anwendung von Mikrotastelementen 2 mit Durchmessern von etwa 100 nm sind mit diesem Tastelement Innenmessungen im Submikrometerbereich durchführbar.

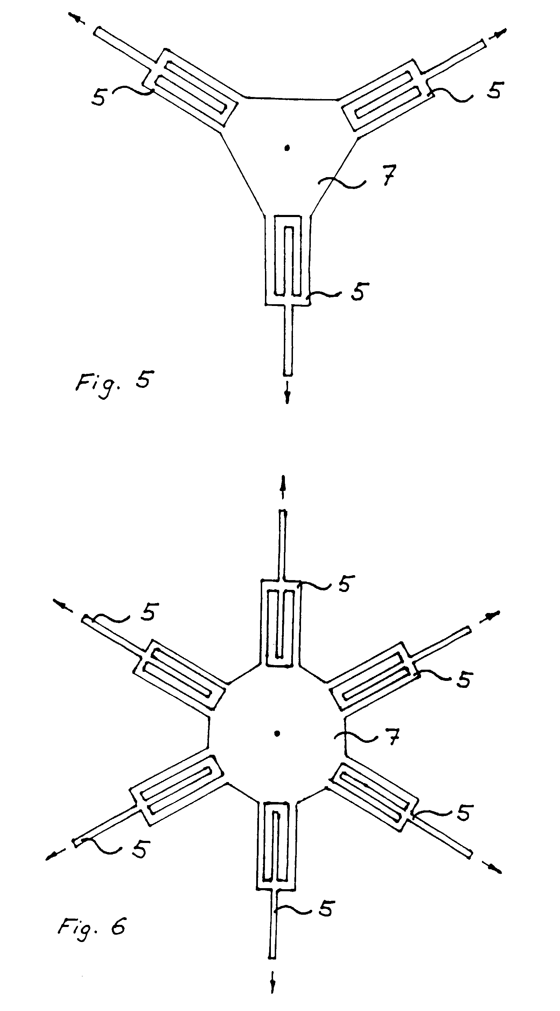

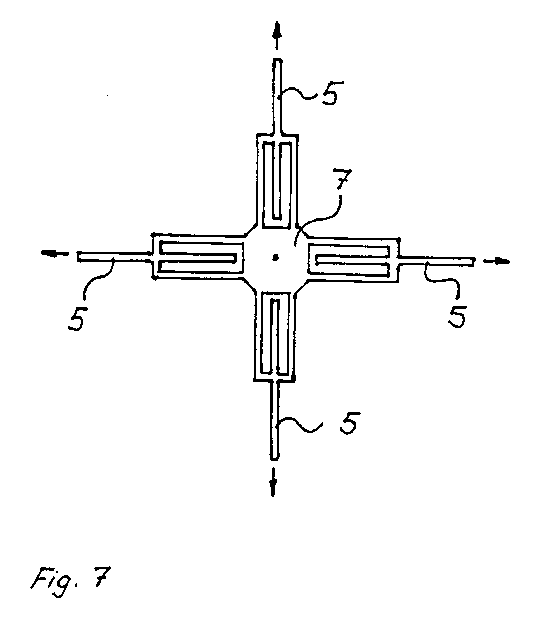

In den Figuren 5, 6 und 7 werden Ausführungsformen des Tastelements aufgezeigt, bei denen aufgrund der Kristallographie piezoelektrischer Materialien wie z.B. Quarz oder
Lithiumniobat aus einem plattenförmigen Element 7 drei um 120° (Figur 5), sechs um 60° (Figur 6) bzw. 4 um 90° (Figur 7) versetzt orientierte Stab- oder Stimmgabelschwinger 5 gewonnen werden, an denen jeweils in den Figuren nicht dargestellte Mikrotastelemente 2 angeordnet sind.
Diese Ausführungsformen der Tastelemente bieten den Vorteil, daß auf dem piezoelektrischen Wafer eine polygonartige Anordnung von Piezoresonatoren 3 oder 5 erzielt werden kann. Der Montage- und Justieraufwand bei der Anfertigung der Tastelemente verringert sich erheblich. Die Abmessungen dieser Tastelemente entsprechen denen der in Fig. 1 beschriebenen.

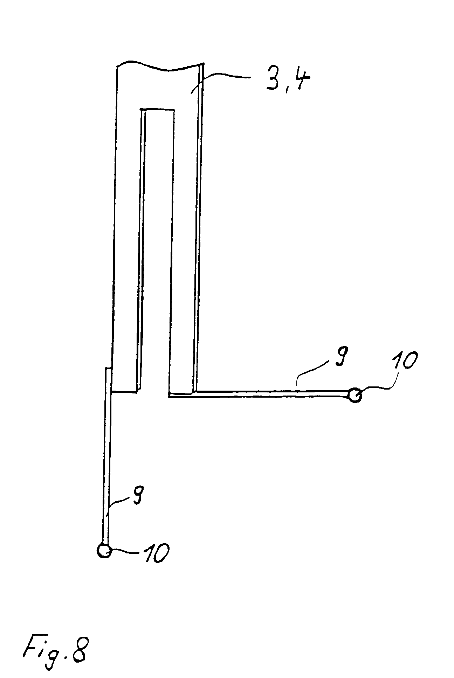

In Figur 8 ist ein Tastelement, dessen Mikrotastelemente aus Glasfaser und Miniaturkügelchen bestehen dargestellt.
In Abhängigkeit von dem Anwendungsgebiet kann die Glasfaser 9 einen Durchmesser von ca. 30 µm und ein Länge von 3 mm besitzen.
Das vordere Ende der Glasfaser 9 ist zu einem Miniaturkügelchen 10 aufgeschmolzen. Das Miniaturkügelchen 10 hat z.B. einen Durchmesser von 100 µm.

## Patentansprüche

1. Tastelement für Koordinatenmeßsysteme unter Verwendung von Mikrotastelementen (2) sowie eines Piezoresonators, der bei Berührung seine Resonanzeigenschaften ändert, wobei die Berührungsdetektion der Mikrotastelemente mit der Probenoberfläche durch Messung der Resonanzeigenschaften des Piezoresonators erfolgt, ***dadurch gekennzeichnet,*** daß das Tastelement mehrere polygonartig angeordnete Piezoresonatoren (3, 4, 5) aufweist, deren jeder mehrere polygonartig angeordnete Mikrotastelemente (2) trägt.

2. Tastelement nach Anspruch 1, dadurch gekennzeichnet, daß die Mikrotastelemente (2) aus Diamanten bestehen.

3. Tastelement nach Anspruch 1 oder 2, dadurch gekennzeichnet, daß die Piezoresonatoren (3, 4, 5) Stabschwinger (5) sind.

4. Tastelement nach Anspruch 1 oder 2, dadurch gekennzeichnet, daß die Piezoresonatoren ineinandergeschachtelte Stimmgabelschwinger (3, 4) sind.

5. Tastelement nach einem der Ansprüche 1 bis 3, dadurch gekennzeichnet, daß die Piezoresonatoren (5) Torsionsschwinger sind.

6. Tastelement nach einem der Ansprüche 1 bis 4, dadurch gekennzeichnet, daß die Piezoresonatoren (3, 4, 5) Longitudinalschwinger sind.

7. Tastelement nach einem der Ansprüche 1 bis 6, dadurch gekennzeichnet, daß die Piezoresonatoren (3, 4, 5) λ/4- Schwinger sind.

8. Tastelement nach Anspruch 3, dadurch gekennzeichnet, daß als Piezoresonatoren an einem plattenförmigen Element (7) drei um 120° oder vier um 90° oder sechs um 60° versetzt orientierte Stab- und/oder Stimmgabelschwingelemente (5) angebracht sind.

9. Tastelement nach Anspruch 3, dadurch gekennzeichnet, daß die Mikrotastelemente (2) über passive Verbindungselemente (6) mit dem sie tragenden Piezoresonator (3, 4, 5) verbunden sind.

10. Tastelement nach Anspruch 9, dadurch gekennzeichnet, daß die passiven Verbindungselemente (6) eine sich zu den Mikrotastelementen (2) hin verjüngende Form aufweisen.

11. Tastelement nach einem der Ansprüche 1 oder 3 bis 11, dadurch gekennzeichnet, daß die Mikrotastelemente (2) aus Glasfasem (9) mit an deren Enden angeschmolzenen Miniaturkügelchen (10) bestehen.

## Claims

1. A sensing element for co-ordinate measuring systems using microsensing elements (2) and a piezo resonator which on contact changes its resonance properties, contact between the microsensing elements and the testpiece surface being detected by measuring resonance properties of the piezo resonator,
characterised in that the sensing element comprises a number of piezo resonators (3, 4, 5) arranged in a polygon, each bearing a number of microsensing elements (2) arranged in a polygon.

2. A sensing element according to claim 1, characterised in that the microsensing elements (2) are diamonds.

3. A sensing element according to claim 1 or 2, characterised in that the piezo resonators (3, 4, 5) are rod oscillators (5).

4. A sensing element according to claim 1 or 2, characterised in that the piezo resonators are interpenetrating tuning fork oscillators (3, 4).

5. A sensing element according to any of claims 1 to 3, characterised in that the piezo resonators (5) are torsion oscillators.

6. A sensing element according to any of claims 1 to 4, characterised in that the piezo resonators (3, 4, 5) are longitudinal oscillators.

7. A sensing element according to any of claims 1 to 6, characterised in that the piezo resonators (3, 4, 5) are λ/4 oscillators.

8. A sensing element according to claim 3, characterised in that the piezo resonators are rod and/or tuning-fork oscillator elements (5) variously offset, either three by 120° or four by 90° or six by 60°, on a plate-like element (7).

9. A sensing element according to claim 3, characterised in that the microsensing elements (2) are connected by passive elements (6) to the piezo resonator (3, 4, 5) holding them.

10. A sensing element according to claim 9, characterised in that the connecting elements (6) have a shape which tapers towards the microsensing elements (2).

11. A sensing element according to any of claims 1 or 3 to 11, characterised in that the microsensing elements (2) comprise glass fibres (9) with miniature spherules (10) fused to their ends.

## Revendications

1. Elément palpeur pour systèmes de mesure de coordonnées par utilisation de micro-éléments palpeurs (2), ainsi que d'un piézo-résonateur, qui modifie ses propriétés de résonance en cas de contact, la détection du contact des micro-éléments palpeurs et de la surface de l'échantillon s'effectuant par mesure des propriétés de résonance du piézo-résonateur, caractérisé en ce que l'élément palpeur comporte plusieurs piézo-résonateurs (3, 4, 5) disposés à la manière d'un polygone, dont chacun porte plusieurs micro-éléments palpeurs (2), disposés à la manière d'un polygone.

2. Elément palpeur selon la revendication 1, caractérisé en ce que les micro-éléments palpeurs (2) sont des diamants.

3. Elément palpeur selon la revendication 1 ou 2, caractérisé en ce que les piézo-résonateurs (3, 4, 5) sont des oscillateurs à tige (5).

4. Elément palpeur selon la revendication 1 ou 2, caractérisé en ce que les piézo-résonateurs sont des oscillateurs à diapason (3, 4) emboîtés les uns dans les autres.

5. Elément palpeur selon l'une des revendications 1 à 3, caractérisé en ce que les piézo-résonateurs (5) sont des oscillateurs de torsion.

6. Elément palpeur selon l'une des revendications 1 à 4, caractérisé en ce que les piézo-résonateurs (3, 4, 5) sont des oscillateurs longitudinaux.

7. Elément palpeur selon l'une des revendications 1 à 6, caractérisé en ce que les piézo-résonateurs (3, 4, 5) sont des oscillateurs λ/4.

8. Elément palpeur selon la revendication 3, caractérisé en ce que des éléments d'oscillation à tige et/ou à diapason (5) dont trois sont orientés avec un décalage de 120° ou quatre orientés avec un décalage de 90° ou six orientés avec un décalage de 60°, sont montés en tant que piézo-résonateurs sur un élément (7) en forme de plaque.

9. Elément palpeur selon la revendication 3, caractérisé en ce que les micro-éléments palpeurs (2) sont reliés au piézo-résonateur (3, 4, 5) qui les porte, par des éléments de liaison (6) passifs.

10. Elément palpeur selon la revendication 9, caractérisé en ce que les éléments de liaison (6) passifs présentent une forme se rétrécissant vers les micro-éléments palpeurs (2).

11. Elément palpeur selon l'une des revendications 1 ou 3 à 11, caractérisé en ce que les micro-éléments palpeurs (2) sont constitués de fibres de verres (9) avec des billes miniatures (10) rapportées par fusion à leurs extrémités.
